# EUROPEAN PATENT APPLICATION

(11) **EP 4 804 588 A1**
(43) Date of publication of application: **09.09.2026**
(21) Application number: 24899621.7
(22) Date of filing: 21.11.2024
(51) Int. Cl.: H04W 16/22

(54) **COMMUNICATION METHOD AND RELATED DEVICE**

(30) Priority: 08.12.2023 CN 202311691852
(71) Applicant: Huawei Technologies Co., Ltd., Shenzhen, Guangdong 518129 (CN)
(72) Inventor: WANG, Jian, Shenzhen, Guangdong 518129 (CN); LI, Rong, Shenzhen, Guangdong 518129 (CN)
(74) Representative: Epping - Hermann - Fischer
(86) International application number: PCT/CN2024/133434
(87) International publication number: WO 2025/118980

(57) **Abstract**

A communication method and a related device are provided, so that computational power of a communication node can be used for artificial intelligence (artificial intelligence, AI) data collection. **In** the method, after a first node receives first configuration information, the first node may perform AI data collection based on the first configuration information, to obtain first AI data. Then, the first node may send the first AI data. Subsequently, a receiver of the first AI data can perform model processing on a first AI model based on the first AI data. Therefore, when a communication node in a communication system serves as an AI participating node, computational power of the communication node can serve as an AI data collection node, to collect AI data.

## Description

This application claims priority to Chinese Patent Application No. 202311691852.5, filed with the China National Intellectual Property Administration on December 8, 2023 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication may be transmission communication performed between two or more communication nodes without propagation via a conductor or a cable. The communication nodes typically include a network device and a terminal device.

Currently, in wireless communication systems, communication nodes generally have a signal transmission/reception capability and a computational capability. A network device having a computational capability is used as an example. The computational capability of the network device is mainly to provide computational power support for a signal transmission/reception capability (for example, performing signal transmission/reception processing), to implement communication between the network device and other communication nodes.

However, in addition to processing communication signals in a communication network, a communication node may also need to undertake artificial intelligence (artificial intelligence, AI)-related processing.

Therefore, how to achieve integration of AI-related processing and a communication network is an urgent technical problem to be resolved.

### SUMMARY

This application provides a communication method and a related device, so that a communication node can serve as an AI data collection node to collect AI data.

A first aspect of this application provides a communication method. The method is performed by a first node. The first node may be a communication device (such as a network device or a terminal device), or the first node may be some components (such as a processor, a chip, or a chip system) in a communication device, or the first node may be a logical module or software that can implement all or some functions of a communication device. In the method, the first node receives first configuration information, where the first configuration information is used to configure AI data collection; and the first node sends first AI data, where the first AI data is collected based on the first configuration information, and the first AI data is used for model processing of a first AI model.

Based on the foregoing technical solution, after the first node receives the first configuration information, the first node may perform AI data collection based on the first configuration information, to obtain the first AI data. Then, the first node may send the first AI data. Subsequently, a receiver of the first AI data can perform model processing on the first AI model based on the first AI data. Therefore, when a communication node in a communication system serves as an AI participating node, the communication node can serve as an AI data collection node, to collect AI data.

In addition, the first node serves as a communication node. After the first node sends the first AI data, the receiver of the first AI data can implement model processing of an AI model based on AI data collected by the communication node.

It should be noted that the technical solutions provided in this application may be applied to a communication system. The communication system may include N distributed nodes and a control node, and N is a positive integer. Any one of the N distributed nodes may be used as the first node, to perform the method in the first aspect and the possible implementations of the first aspect. The control node may be configured to perform a method in the following second aspect and the possible implementations of the second aspect.

Optionally, the communication system may further include a central node, and the central node may be configured to perform a method in the following third aspect and the possible implementations of the third aspect. Alternatively, a function of the central node is performed by the control node, that is, the control node is further configured to perform the method related to the central node.

Optionally, the communication system may further include a data receiving node, and the data receiving node may be configured to perform a method in the following fourth aspect and the possible implementations of the fourth aspect. Alternatively, a function of the data receiving node is performed by the control node, that is, the control node is further configured to perform the method related to the data receiving node.

In this application, terms such as an AI model, a neural network model, an AI neural network model, a machine learning model, and an AI processing model are interchangeable.

In this application, terms such as data collection, data acquisition, data gathering, data obtaining, and data capture are interchangeable.

It should be understood that model processing in embodiments of this application includes at least one of model training, model inference, and model monitoring. Correspondingly, the first AI data sent by the first node includes at least one of AI data used in a model training phase of the first AI model, AI data used in a model inference phase of the first AI model, and AI data used in a model monitoring phase of the first AI model.

In an implementation example, the AI data that is included in the first AI data and that is used in the model training phase of the first AI model may include at least one of input data, feature data, and label data used for training of the first AI model.

In another implementation example, the AI data that is included in the first AI data and that is used in the model inference phase of the first AI model may include at least one of input data, feature data, and inference result data used for inference of the first AI model.

In another implementation example, the AI data that is included in the first AI data and that is used in the model monitoring phase of the first AI model may include at least one of input data, feature data, label data, inference result data, AI model performance data, and communication performance data used for monitoring of the first AI model.

Optionally, a wireless communication signal may be transmitted (for example, configuration information of a communication resource may be received/sent, or a reference signal may be received/sent) between different communication nodes (for example, the first node and another node mentioned below, including a second node, a control node, a central node, and the like). The AI model (for example, the first AI model and a second AI model mentioned below) in embodiments of this application may be configured to process (including at least one of management, configuration, update, and optimization) the wireless communication signal. For example, the AI model may include one or more of an AI model used for modulation and/or demodulation, an AI model used for channel prediction, an AI model used for beam management, an AI model used for assisted positioning, an AI model used for channel compression, an AI model used for resource scheduling, an AI model used for mobility management, an AI model used for load balancing, an AI model used for network energy saving, and an AI model used to replace one or more modules in a transmitter and/or a receiver. Alternatively, the AI model in embodiments of this application may be an AI model used for another AI task, for example, an AI model used for image recognition, an AI model used for natural language processing, or an AI model used for computer vision.

In a possible implementation of the first aspect, the first configuration information includes at least one of the following:
an identifier of an AI model corresponding to collected AI data;
an identifier of an AI function corresponding to collected AI data;
an identifier of a source node of collected AI data;
indication information indicating model processing corresponding to collected AI data;
indication information indicating that a configuration manner of configuration information for AI data collection is a centralized manner or a decentralized manner;
indication information indicating that an AI data collection manner is a centralized manner or a decentralized manner;
indication information indicating an AI data feature of collected AI data;
indication information indicating AI data processing of collected AI data;
indication information indicating an AI data collection period; and
indication information indicating transmission information of collected AI data.

Optionally, the AI data feature includes one or more of a quantity of AI data, a sample size, collection time, a collection location, and a distribution.

Optionally, the AI data processing includes post-processing of output data of the AI model and/or preprocessing of input data of the AI model, for example, one or more of dimension conversion and precision conversion.

Optionally, the AI data collection period includes: The AI data is collected in a periodic manner, the AI data is collected in a semi-static manner, the AI data is collected in a (dynamic) trigger manner, or the like.

Optionally, the transmission information of the AI data includes one or more of a data structure, a format, precision, a dimension, and a transmission resource.

It should be understood that, when the first configuration information includes at least one of the foregoing items, the first configuration information may be sent by using one or more messages, that is, the first node may obtain the first configuration information by using a process of receiving one or more messages.

Based on the foregoing technical solution, the first configuration information used to configure AI data collection may include at least one of the foregoing items, to improve flexibility of implementing the solution.

In a possible implementation of the first aspect, the first node is one of N distributed nodes, and N is an integer greater than or equal to 1.

Based on the foregoing technical solution, the first node may be one of the N distributed nodes, that is, any one of the N distributed nodes may perform the method performed by the first node, so that all the N distributed nodes can serve as data collection nodes, to implement AI data collection in a distributed scenario.

In a possible implementation of the first aspect, that the first node receives the first configuration information includes: The first node receives the first configuration information from a control node, where the control node is configured to control data collection of the N distributed nodes; or the first node receives the first configuration information from a control node through a central node; or the first node receives the first configuration information from a second node, where the second node is a node different from the first node in the N distributed nodes, and N is greater than 1.

Optionally, before the second node sends the first configuration information to the first node, the second node may receive one or more pieces of configuration information from the control node, and send the first configuration information in the one or more pieces of configuration information to the first node. In other words, the first configuration information sent by the second node to the first node is from the control node.

Optionally, the control node and the central node may be a same node, or the control node and the central node may be different logical nodes in a physical node, or the control node and the central node may be two independent different nodes.

Based on the foregoing technical solution, the first node may receive the first configuration information in the foregoing plurality of manners. The first node is one of the N distributed nodes. In this manner, the distributed node can receive the first configuration information in a plurality of different scenarios, and flexibility of implementing the solution is improved.

In a possible implementation of the first aspect, the first configuration information is configuration information corresponding to the first node in M pieces of configuration information, the M pieces of configuration information are at least used to configure AI data collection of M distributed nodes in the N distributed nodes, and M is less than or equal to N. The method further includes: The first node sends at least one of the M pieces of configuration information to at least one of the M distributed nodes.

Based on the foregoing technical solution, the first node may receive the M pieces of configuration information, and determine the first configuration information from the M pieces of configuration information. The M pieces of configuration information are at least used to configure AI data collection of the M distributed nodes in the N distributed nodes. Correspondingly, the first node may send at least one of the M pieces of configuration information to another node in the M distributed nodes, so that the another distributed node can obtain the corresponding configuration information and perform AI data collection.

Optionally, the first node sends the at least one of the M pieces of configuration information to the at least one of the M distributed nodes, to enable all the M distributed nodes to obtain respective corresponding configuration information, so that the M distributed nodes can implement AI data collection based on the respective corresponding configuration information. Further, optionally, in the sending process, the first node may send, to each of the M distributed nodes, configuration information corresponding to each distributed node; or the first node may send the M pieces of configuration information to each of the M distributed nodes; or the first node may send the M pieces of configuration information to some of the M distributed nodes, and the some distributed nodes send, to some other distributed nodes, configuration information corresponding to the some other distributed nodes; or all the M distributed nodes are enabled, in another manner, to obtain respective corresponding configuration information. This is not limited herein.

Optionally, in the N distributed nodes, configuration information corresponding to different distributed nodes may be different. Therefore, the M pieces of configuration information may be respectively used to configure AI data collection of the M distributed nodes in the N distributed nodes.

Optionally, in the N distributed nodes, configuration information corresponding to different distributed nodes may be the same. Therefore, in addition to that the M pieces of configuration information may be respectively used to configure AI data collection of the M distributed nodes in the N distributed nodes, at least one of the M pieces of configuration information may be further used to configure AI data collection of at least one distributed node other than the M distributed nodes in the N distributed nodes.

In a possible implementation of the first aspect, the first node is one of N distributed nodes, and N is an integer greater than or equal to 1. That the first node sends the first AI data includes: The first node sends the first AI data to a data receiving node, where the data receiving node is used for AI data collection; or the first node sends the first AI data to the central node.

Optionally, the control node and the data receiving node may be a same node, or the control node and the data receiving node may be different logical nodes in a physical node, or the control node and the data receiving node may be two independent different nodes.

Based on the foregoing technical solution, the first node may send the first AI data in the foregoing plurality of manners. The first node is one of the N distributed nodes. In this manner, the distributed node can send collected AI data in a plurality of different scenarios, and flexibility of implementing the solution is improved.

In a possible implementation of the first aspect, the method further includes: The first node sends data of the first node to another node in the N distributed nodes, where the data of the first node is used for data collection of the another node.

Optionally, the data of the first node may include a part or all of the first AI data.

Optionally, the data of the first node may include communication data of the first node, for example, a reference signal or positioning data.

Optionally, the data of the first node may include model data of a local AI model of the first node, for example, at least one of AI data used in a model training phase of the local AI model, AI data used in a model inference phase of the local AI model, and AI data used in a model monitoring phase of the local AI model.

Based on the foregoing technical solution, for the N distributed nodes, a part or all of AI data collected by one of the distributed nodes may be determined by using data sent by another distributed node. Correspondingly, the first node may further send the data of the first node to the another node in the N distributed nodes, so that the another node can implement data collection based on the data of the first node.

In a possible implementation of the first aspect, the method further includes: The first node receives data from another node in the N distributed nodes, where the data of the another node is used to determine a part or all of the first AI data. Based on the foregoing technical solution, for the N distributed nodes, a part or all of AI data collected by one of the distributed nodes may be determined by using data sent by another distributed node. Correspondingly, the first node may further receive the data from the another node in the N distributed nodes (for example, second data from the second node), so that the first node can implement data collection based on the data of the another node.

Optionally, the data of the another node may include communication data of the another node, for example, a reference signal or positioning data.

Optionally, the data of the another node may include model data of a local AI model of the another node, for example, at least one of AI data used in a model training phase of the local AI model, AI data used in a model inference phase of the local AI model, and AI data used in a model monitoring phase of the local AI model. For example, the another node is the second node. A local AI model of the second node may be denoted as a second AI model, and model data of the second AI model may be denoted as second AI data. An implementation of the second AI data is similar to that of the first AI data. The second AI data received by the first node may include at least one of AI data used in a model training phase of the second AI model, AI data used in a model inference phase of the second AI model, and AI data used in a model monitoring phase of the second AI model.

In an implementation example, the AI data that is included in the second AI data and that is used in the model training phase of the second AI model includes at least one of input data, feature data, and label data used for training of the second AI model.

In another implementation example, the AI data that is included in the second AI data and that is used in the model inference phase of the second AI model includes at least one of input data, feature data, and inference result data used for inference of the second AI model.

In another implementation example, the AI data that is included in the second AI data and that is used in the model monitoring phase of the second AI model includes at least one of input data, feature data, label data, inference result data, AI model performance data, and communication performance data used for monitoring of the second AI model. A second aspect of this application provides a communication method. The method is performed by a control node. The control node may be a communication device (such as a network device or a terminal device), or the control node may be some components (such as a processor, a chip, or a chip system) in a communication device, or the control node may be a logical module or software that can implement all or some functions of a communication device. In the method, the control node determines first configuration information, where the first configuration information is used for AI data collection; and the control node sends the first configuration information.

Based on the foregoing technical solution, the first configuration information sent by the control node is used for AI data collection. To be specific, after the first node receives the first configuration information, the first node may perform AI data collection based on the first configuration information, to obtain first AI data. Then, the first node may send the first AI data. Subsequently, a receiver of the first AI data can perform model processing on a first AI model based on the first AI data. Therefore, when a communication node in a communication system serves as an AI participating node, the communication node can serve as an AI data collection node, to collect AI data.

In a possible implementation of the second aspect, the first configuration information includes at least one of the following:
an identifier of an AI model corresponding to collected AI data;
an identifier of an AI function corresponding to collected AI data;
an identifier of a source node of collected AI data;
indication information indicating model processing corresponding to collected AI data;
indication information indicating that a configuration manner of configuration information for AI data collection is a centralized manner or a decentralized manner;
indication information indicating that an AI data collection manner is a centralized manner or a decentralized manner;
indication information indicating an AI data feature of collected AI data;
indication information indicating AI data processing of collected AI data;
indication information indicating an AI data collection period; and
indication information indicating transmission information of collected AI data.

Based on the foregoing technical solution, the first configuration information used to configure AI data collection may include at least one of the foregoing items, to improve flexibility of implementing the solution.

Optionally, the AI data feature includes one or more of a quantity of AI data, a sample size, collection time, a collection location, and a distribution.

Optionally, the AI data processing includes post-processing of output data of the AI model and/or preprocessing of input data of the AI model, for example, one or more of dimension conversion and precision conversion.

Optionally, the AI data collection period includes: The AI data is collected in a periodic manner, the AI data is collected in a semi-static manner, the AI data is collected in a (dynamic) trigger manner, or the like.

Optionally, the transmission information of the AI data includes one or more of a data structure, a format, precision, a dimension, and a transmission resource.

It should be understood that, when the first configuration information includes at least one of the foregoing items, the first configuration information may be sent by using one or more messages, that is, the first node may obtain the first configuration information by using a process of receiving one or more messages.

In a possible implementation of the second aspect, the control node is configured to control data collection of N distributed nodes, where N is an integer greater than or equal to 1, and the first configuration information is used for AI data collection of a first AI node in the N distributed nodes.

Based on the foregoing technical solution, the first node that performs data collection based on the first configuration information may be one of the N distributed nodes, that is, any one of the N distributed nodes may perform the method performed by the first node, so that all the N distributed nodes can serve as data collection nodes, to implement AI data collection in a distributed scenario.

In a possible implementation of the second aspect, that the control node sends the first configuration information includes: The control node sends the first configuration information to the first node; or the control node sends the first configuration information to the first node through a central node; or the control node sends the first configuration information to the first node through a second node, where the second node is a node different from the first node in the N distributed nodes, and N is greater than 1.

Based on the foregoing technical solution, the control node may send the first configuration information to the first node in the foregoing plurality of manners. The first node is one of the N distributed nodes. In this manner, the distributed node can receive the first configuration information in a plurality of different scenarios, and flexibility of implementing the solution is improved.

In a possible implementation of the second aspect, the first configuration information is one of K pieces of sent configuration information, the K pieces of configuration information are used to configure AI data collection of the N distributed nodes, and K is less than or equal to N.

Based on the foregoing technical solution, the control node may send the K pieces of configuration information, and the K pieces of configuration information are used to configure AI data collection of the N distributed nodes. Correspondingly, each distributed node can obtain corresponding configuration information based on the K pieces of configuration information, and perform AI data collection.

Optionally, in the N distributed nodes, configuration information corresponding to different distributed nodes may be different from each other. Therefore, values of K and N may be equal, that is, the K pieces of configuration information may be used to configure AI data collection of different nodes in the N distributed nodes.

Optionally, in the N distributed nodes, configuration information corresponding to different distributed nodes may be the same. Therefore, K may be less than N, that is, at least one of the K pieces of configuration information is used to configure AI data collection of at least two of the N distributed nodes. Correspondingly, configuration information for AI data collection of the at least two nodes is the same.

In a possible implementation of the second aspect, the method further includes: The control node receives first AI data, where the first AI data is collected based on the first configuration information.

Based on the foregoing technical solution, after the control node sends the first configuration information, the control node may further receive the first AI data collected based on the first configuration information. The first AI data may be from the first node, and the first node serves as a communication node. After the first node sends the AI data, the control node can implement model processing of an AI model based on the AI data collected by the communication node.

It should be understood that model processing in embodiments of this application includes at least one of model training, model inference, and model monitoring. Correspondingly, the first AI data sent by the first node includes at least one of AI data used in a model training phase of the first AI model, AI data used in a model inference phase of the first AI model, and AI data used in a model monitoring phase of the first AI model.

In an implementation example, the AI data that is included in the first AI data and that is used in the model training phase of the first AI model may include at least one of input data, feature data, and label data used for training of the first AI model.

In another implementation example, the AI data that is included in the first AI data and that is used in the model inference phase of the first AI model may include at least one of input data, feature data, and inference result data used for inference of the first AI model.

In another implementation example, the AI data that is included in the first AI data and that is used in the model monitoring phase of the first AI model may include at least one of input data, feature data, label data, inference result data, AI model performance data, and communication performance data used for monitoring of the first AI model.

In a possible implementation of the second aspect, that the control node receives the first AI data includes: The control node receives the first AI data from the first node; or the control node receives the first AI data through a central node. Based on the foregoing technical solution, the control node may receive the first AI data in the foregoing plurality of manners, to improve flexibility of implementing the solution.

A third aspect of this application provides a communication method. The method is performed by a central node. The central node may be a communication device (such as a network device or a terminal device), or the central node may be some components (such as a processor, a chip, or a chip system) in a communication device, or the central node may be a logical module or software that can implement all or some functions of a communication device. In the method, the central node receives first configuration information from a control node; and the central node sends the first configuration information to a first node.

For steps performed by the central node, further refer to the descriptions in the first aspect or the second aspect and the possible implementations of the first aspect or the second aspect.

A fourth aspect of this application provides a communication method. The method is performed by a data receiving node. The data receiving node may be a communication device (such as a network device or a terminal device), or the data receiving node may be some components (such as a processor, a chip, or a chip system) in a communication device, or the data receiving node may be a logical module or software that can implement all or some functions of a communication device. In the method, the data receiving node receives first AI data from a first node.

For steps performed by the data receiving node, further refer to the descriptions in the first aspect or the second aspect and the possible implementations of the first aspect or the second aspect.

A fifth aspect of this application provides a communication apparatus. The apparatus is a first node or some components (for example, a processor, a chip, a chip system, a logical module, or software) in a first node, and the apparatus includes a transceiver unit and a processing unit. The transceiver unit is configured to receive first configuration information, where the first configuration information is used to configure AI data collection; and the processing unit sends first AI data, where the first AI data is collected based on the first configuration information, and the first AI data is used for model processing of a first AI model.

In the fifth aspect of this application, the component modules of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is a control node or some components (for example, a processor, a chip, a chip system, a logical module, or software) in a control node. The apparatus includes a transceiver unit and a processing unit. The processing unit is configured to determine first configuration information, where the first configuration information is used for AI data collection. The transceiver unit is configured to send the first configuration information.

In the sixth aspect of this application, the component modules of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a central node or some components (for example, a processor, a chip, a chip system, a logical module, or software) in a central node. The apparatus includes a transceiver unit. The transceiver unit is configured to receive first configuration information from a control node. The transceiver unit is further configured to send the first configuration information to a first node.

In the seventh aspect of this application, the component modules of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a data receiving node or some components (for example, a processor, a chip, a chip system, a logical module, or software) in a data receiving node. The apparatus includes a transceiver unit. The transceiver unit is configured to receive first AI data from a first node.

In the eighth aspect of this application, the component modules of the communication apparatus may be further configured to: perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to a memory, the memory is configured to store a program or instructions, and the at least one processor is configured to execute the program or the instructions, to enable the apparatus to implement the method according to any possible implementation in any one of the first aspect to the fourth aspect.

A tenth aspect of this application provides a communication apparatus, including at least one logic circuit and an input/output interface. The logic circuit is configured to perform the method according to any possible implementation in any one of the first aspect to the fourth aspect.

An eleventh aspect of this application provides a communication system. The communication system includes the first node and the control node described above.

Optionally, the communication system further includes another node in N distributed nodes, for example, a second node.

Optionally, the communication system further includes a data receiving node.

Optionally, the communication system further includes a central node.

A twelfth aspect of this application provides a computer-readable storage medium. The storage medium is configured to store one or more computer-executable instructions. When the computer-executable instructions are executed by a processor, the processor performs the method according to any possible implementation in any one of the first aspect to the fourth aspect.

A thirteenth aspect of this application provides a computer program product (or referred to as a computer program). When a computer program in the computer program product is executed by a processor, the processor performs the method according to any possible implementation of any one of the first aspect to the fourth aspect.

A fourteenth aspect of this application provides a chip system. The chip system includes at least one processor, configured to support a communication apparatus in implementing the method according to any possible implementation of any one of the first aspect to the fourth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the fifth aspect to the fourteenth aspect, refer to the technical effects brought by different designs in the first aspect to the fourth aspect. Details are not described herein again.

### BRIEF DESCRIPTION OF DRAWINGS

FIG. 1a to FIG. 1c are diagrams of communication systems according to this application;
FIG. 2a to FIG. 2h are diagrams of AI processing processes according to this application;
FIG. 3 is a diagram of interaction in a communication method according to this application;
FIG. 4a to FIG. 4e, FIG. 5a to FIG. 5c, and FIG. 6 are diagrams of AI processing processes according to this application; and
FIG. 7 to FIG. 11 are diagrams of communication apparatuses according to this application.

### DESCRIPTION OF EMBODIMENTS

First, some terms in embodiments of this application are explained and described, to facilitate understanding of a person skilled in the art.
(1) Terminal device: may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device may communicate with one or more core networks or the Internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having wireless sending and receiving functions. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, or an internet of things (internet of things, IoT) device.

In embodiments of this application, the terminal device may further obtain an AI service provided by a network device. Optionally, the terminal device may further have an AI processing capability.

(2) Network device: may be a device in a wireless network. For example, the network device may be a RAN node (or device) through which a terminal device accesses the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB or a home NodeB, HNB), a baseband unit (baseband unit, BBU), a wireless fidelity (wireless fidelity, Wi-Fi) access point AP, and the like. In addition, in a network structure, a network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control or medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that can be implemented by the network elements, refer to Table 1 below.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. Neither of a specific technology and a specific device form used by the network device is limited in embodiments of this application. For ease of description, this is not limited in embodiments of this application.

The network device may further include a core network device. For example, the core network device includes a network element such as a mobility management entity (mobility management entity, MME), a home subscriber server (home subscriber server, HSS), a serving gateway (serving gateway, S-GW), a policy and charging rules function (policy and charging rules function, PCRF), or a public data network gateway (public data network gateway, PDN gateway, P-GW) in a 4th generation (4th generation, 4G) network; or an access and mobility management function (access and mobility management function, AMF), a user plane function (user plane function, UPF), or a session management function (session management function, SMF) in a 5G network. In addition, the core network device may further include another core network device in a 5G network and a next-generation network of the 5G network. In embodiments of this application, the network device may alternatively be a network node having an AI capability, and may provide an AI service for a terminal or another network device, for example, may be an AI node, a computational power node, a RAN node having an AI capability, or a core network element having an AI capability on a network side (an access network or a core network).

In embodiments of this application, an apparatus configured to implement a function of a network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement a function of a network device is a network device. (3) Configuration and preconfiguration: In this application, both the configuration and the preconfiguration are used. The configuration means that a network device/server sends configuration information of some parameters or values of parameters to a terminal by using a message or signaling, so that the terminal determines a parameter for communication or a resource for transmission based on the values or the information. Similar to the configuration, the preconfiguration may be parameter information or a parameter value negotiated by a network device/server with a terminal device in advance, or may be parameter information or a parameter value that is to be used by a base station/network device or a terminal device and that is specified in a standard protocol, or may be parameter information or a parameter value pre-stored in a base station/server or a terminal device. This is not limited in this application.

Further, the values and parameters may be changed or updated.

(4) Terms "system" and "network" in embodiments of this application may be used interchangeably. "A plurality of" means two or more than two. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may alternatively be understood as "outputting" of a chip interface, and "receiving" may alternatively be understood as "inputting" of the chip interface.

In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.

It may be understood that necessary processing, for example, encoding and modulation, may be performed on information between a source end and a destination end of information sending, but the destination end may understand valid information from the source end. Similar expressions in this application may be understood similarly. Details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

In this application, unless otherwise specified, for same or similar parts of the embodiments, refer to each other. In embodiments of this application and methods/designs/implementations in embodiments, unless otherwise specified or unless a logic conflict occurs, terms and/or descriptions between different embodiments and between methods/designs/implementations in embodiments are consistent and may be mutually referenced, and technical features in different embodiments and methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

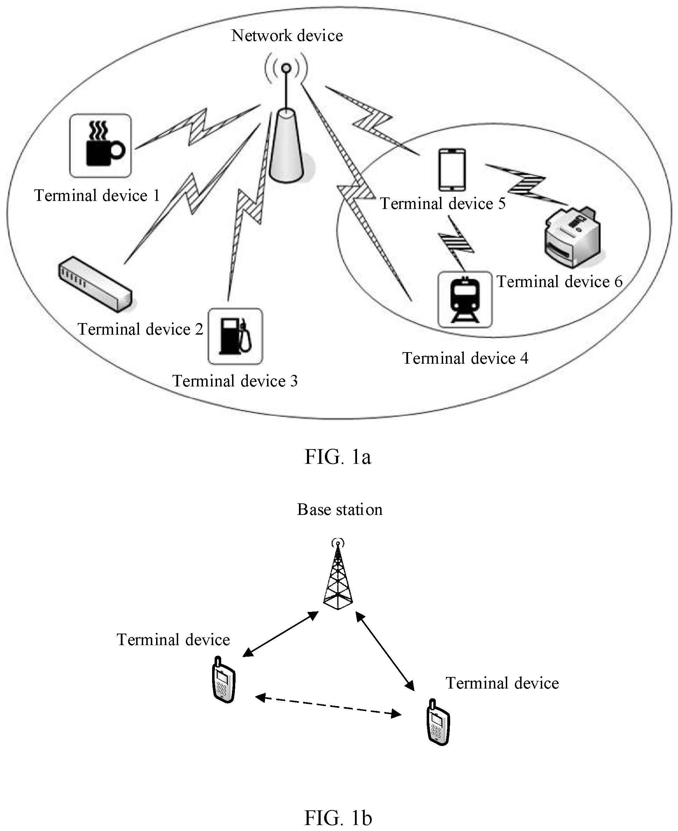

FIG. 1a is a diagram of a communication system according to this application. FIG. 1a shows one network device and six terminal devices as an example. The six terminal devices are respectively a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. In addition, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an internet of vehicles system, the terminal device 5 separately sends AI configuration information to the terminal device 4 and the terminal device 6, and receives data sent by the terminal device 4 and the terminal device 6. Correspondingly, the terminal device 4 and the terminal device 6 receive the AI configuration information sent by the terminal device 5, and send the data to the terminal device 5.

The communication system shown in FIG. 1a is used as an example. In addition to a communication-related service, an AI-related service may further be performed between different devices (including between network devices, between a network device and a terminal device, and/or between terminal devices).

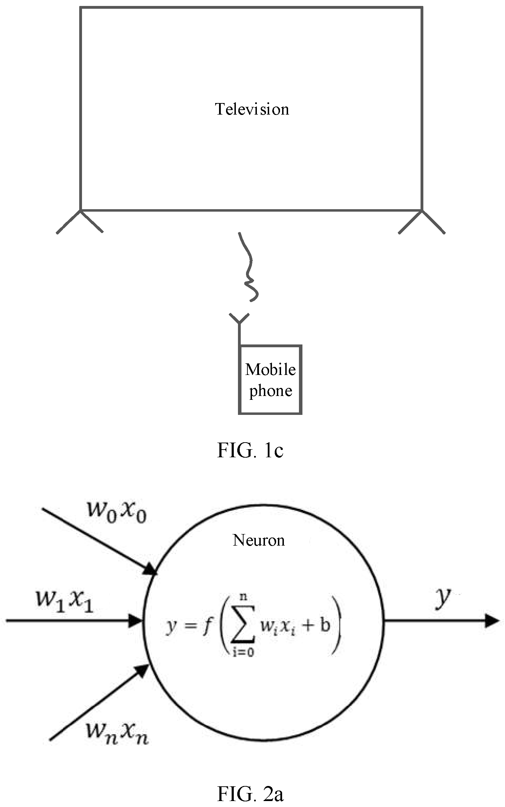

As shown in FIG. 1b, an example in which a network device is a base station is used. A communication-related service and an AI-related service may be performed between the base station and one or more terminal devices, and the communication-related service and the AI-related service may also be performed between different terminal devices. As shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced into the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in an access network device, a core network device, a cloud server, or an operation, administration and maintenance (operation, administration and maintenance, OAM), to implement an AI-related function. The OAM may serve as a network manager of a core network device and/or as a network manager of an access network device. Alternatively, the AI network element may be an independently disposed network element in the communication system. Optionally, a terminal or a chip built in a terminal may also include an AI entity, configured to implement an AI-related function.

The following briefly describes artificial intelligence (artificial intelligence, AI) that may be used in this application. The artificial intelligence (artificial intelligence, AI) can enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. Learning tasks may be classified into a classification task and a regression task based on types of labels.

In terms of the unsupervised learning, an internal pattern of samples is explored autonomously by using algorithms based on collected sample values. In a specific type of algorithm of the unsupervised learning, samples are used as a supervised signal. In other words, a model learns a mapping relationship between samples. This is referred to as self-supervised learning. During training, model parameters are optimized by calculating errors between a predicted value of the model and the samples. The self-supervised learning may be used for signal compression and decompression restoration. Common algorithms include an autoencoder, a generative adversarial network, and the like.

The reinforcement learning is different from the supervised learning, and is an algorithm that learns a problem-resolving policy by interacting with an environment. Different from the supervised learning and the unsupervised learning, the reinforcement learning does not have clear "correct" action label data. The algorithm needs to interact with the environment to obtain a reward signal fed back by the environment and then adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a good (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

The idea of the neural network is from a neuron structure of brain tissue. For example, each neuron performs a weighted summation operation on input values of the neuron, and outputs an operation result through an activation function.

FIG. 2a is a diagram of a neuron structure. It is assumed that inputs of the neuron are *x =* [*x*₀, *x*₁, ... , *xₙ*], and weights corresponding to the inputs are w = [w, *w*₁, *..., wₙ*], where n is a positive integer, and *wᵢ* and *xᵢ* may be of various possible types such as a decimal, an integer (for example, 0, a positive integer, or a negative integer), or a complex number. *wᵢ* is used as a weight of *xᵢ,* and is used to perform weighting on *xᵢ.* A bias for performing weighted summation on input values based on the weights is, for example, b. The activation function may have a plurality of forms. Assuming that an activation function of a neuron is y = *f*(*z*) = max (0, z), an output of the neuron is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$ *.* For another example, if an activation function of a neuron is y = *f*(*z*) = z, an output of the neuron is $y = f \left({\sum }_{i = 0}^{i = n} {w}_{i} ∗ {x}_{i} + b\right) = {\sum }_{i = 0}^{i = n} {w}_{i} ∗ {x}_{i} + b$. b may be of various possible types such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network are/is increased, so that an expression capability of the neural network can be improved, and more powerful information extraction and abstraction modeling capabilities can be provided for a complex system. The depth of the neural network may refer to a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

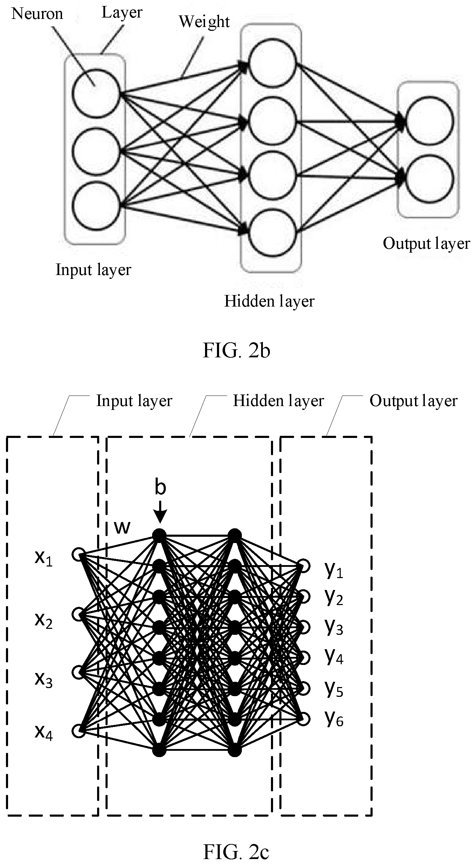

FIG. 2b is a diagram of an FNN network. A feature of the FNN network is that neurons at adjacent layers are completely connected in pairs. Due to this feature, the FNN usually needs a large amount of storage space, resulting in high computational complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at a time. This greatly reduces a calculation amount for a model parameter. In addition, based on different types of information captured through the window (for example, a person and an object in a same image are information of different types), different convolution kernel operations may be used for each window, so that the CNN can better extract a feature of input data. The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel coding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: Some or all parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (or referred to as model inference, inference, prediction, or the like), model monitoring or model verification, inference result release, or the like. The AI function may also be referred to as an AI (related) operation or an AI-related function.

The following describes an example of an implementation process of a neural network with reference to the accompanying drawings.
1. A fully-connected neural network is also referred to as a multilayer perceptron (multilayer perceptron, MLP).

As shown in FIG. 2c, one MLP includes one input layer (on the left side), one output layer (on the right side), and a plurality of hidden layers (in the middle). Each layer of the MLP includes several nodes, which are referred to as neurons. Neurons at two adjacent layers are connected in pairs.

Optionally, in consideration of neurons at two adjacent layers, an output h of a neuron at a lower layer is obtained by using a weighted sum of all neurons x at an upper layer connected to the neuron at the lower layer and an activation function. This may be expressed as: $h = f \left(wx+b\right) .$

Herein, w is a weight matrix, b is a bias vector, and f is the activation function.

Further, optionally, the output of the neural network may be recursively expressed as: $y = {f}_{n} \left({w}_{n}{f}_{n - 1}\left(…\right)+{b}_{n}\right) .$

Herein, n is an index of a neural network layer, 1≤n≤N, and N is a total quantity of layers of the neural network.

In other words, the neural network may be understood as a mapping relationship from an input data set to an output data set. The neural network is usually initialized randomly, and a process of obtaining the mapping relationship from random w and b by using existing data is referred to as training of the neural network.

Optionally, a specific training manner is to evaluate an output result of the neural network by using a loss function (loss function).

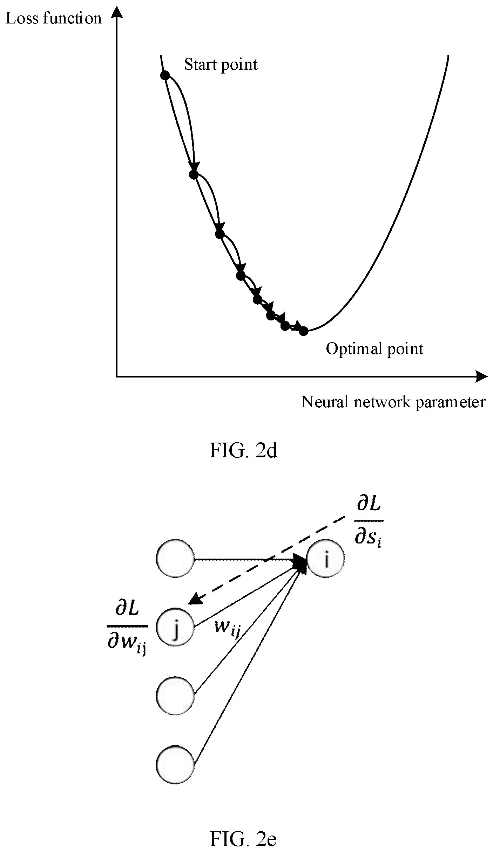

As shown in FIG. 2d, an error may be backpropagated, and neural network parameters (including ***w*** and ***b***) can be iteratively optimized by using a gradient descent method until the loss function reaches a minimum value, that is, "a good point (for example, an optimal point)" in FIG. 2d. It may be understood that the neural network parameter corresponding to "the good point (for example, the optimal point)" in FIG. 2d may be used as a neural network parameter in trained AI model information.

Further, optionally, a gradient descent process may be expressed as: $θ ← θ - η \frac{\partial L}{\partial θ} .$

Herein, ***θ*** is a to-be-optimized parameter (including **w** and **b**), L is the loss function, η is a learning rate and controls a gradient descent step, ∂ represents a derivative operation, and $\frac{\partial L}{\partial θ}$ represents obtaining a derivative of ***θ*** with respect to *L*.

Further, optionally, a backpropagation process uses a chain rule for obtaining a partial derivative.

As shown in FIG. 2e, a gradient of a parameter at a preceding layer may be obtained through recursive calculation based on a gradient of a parameter at an immediately succeeding layer. This may be expressed as: $\frac{\partial L}{\partial {w}_{i j}} = \frac{\partial L}{\partial {s}_{i}} \frac{\partial {s}_{i}}{\partial {w}_{ij}} .$

Herein, wᵢⱼ is a weight of a connection between a node j and a node i, and sᵢ is an input weighted sum on the node i.

### 2. Federated learning (Federated Learning, FL)

A concept of the federated learning is proposed to effectively resolve difficulties faced by the current development of artificial intelligence. While fully ensuring user data privacy and security, the federated learning facilitates collaboration between various edge devices and a server at a central end to efficiently complete a learning task of a model.

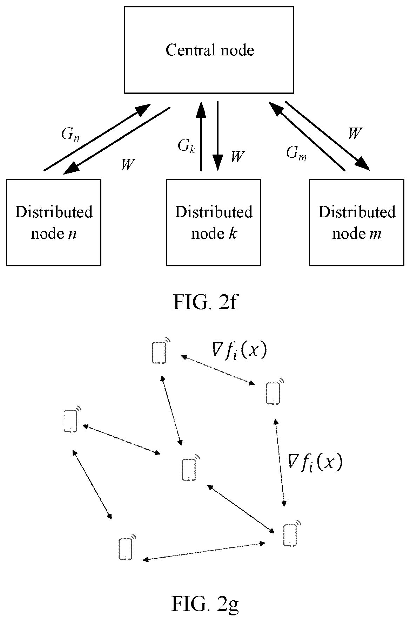

As shown in FIG. 2f, an FL architecture is a most widely used training architecture in the FL field currently. A FedAvg algorithm is a basic algorithm of FL. An algorithm procedure thereof is roughly as follows:
(1) A central end initializes a to-be-trained model ${w}_{g}^{0}$ and broadcasts the model to all client devices.
(2) In a (*t* ∈ [1, *T*])^{th} round, a client *k* ∈ [1, *K*] performs *E*-epoch training on a received global model ${w}_{g}^{t - 1}$ based on a local data set 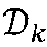 , to obtain a local training result ${w}_{k}^{t}$, and reports the local training result to the central node.
(3) The central node collects and summarizes local training results from all (or some) clients. Assuming that a set of clients that upload local models in the *t*^{th} round is 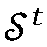 , the central end performs weighted averaging by using quantities of samples of the corresponding clients as weights, to obtain a new global model. A specific update rule is 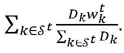 Then, the central end broadcasts the global model ${w}_{g}^{t}$ of the latest version to all the client devices for a new round of training.
(4) Steps (2) and (3) are repeated until the model converges finally or a quantity of training rounds reaches an upper limit.

In addition to the local model ${w}_{k}^{t}$, a local gradient ${g}_{k}^{t}$ for training may further be reported. The central node averages local gradients, and updates the global model based on a direction of an average gradient.

It can be learned that, in an FL framework, a data set exists on a distributed node. To be specific, the distributed node collects a local data set, performs local training, and reports a local result (model or gradient) obtained through training to the central node. The central node does not have a data set, is only responsible for fusing training results of distributed nodes to obtain the global model, and delivers the global model to the distributed nodes.

3. Decentralized learning: Different from the federated learning, another distributed learning architecture is decentralized learning.

As shown in FIG. 2g, a fully distributed system without a central node is considered. A design target *f*(*x*) of a decentralized learning system is usually an average value of targets *fᵢ*(*x*) of nodes, that is, $f \left(x\right) = \frac{1}{n} {\sum }_{i = 1}^{n} {f}_{i} \left(x\right)$, where *n* is a quantity of distributed nodes, and *x* is a to-be-optimized parameter. In machine learning, *x* is a parameter of a machine learning (for example, a neural network) model. Each node calculates a local gradient *∇fᵢ*(*x*) by using local data and the local target *fᵢ*(*x*), and then sends the local gradient to a neighboring node for which communication is reachable. After receiving gradient information sent by a neighboring node, any node may update a parameter *x* of a local model according to the following formula: ${x}_{i}^{k + 1} = {x}_{i}^{k} - {α}_{k} \left(\frac{1}{\left|{N}_{i}\right|}{\sum }_{j ∈ {N}_{i}} ∇ {f}_{j} \left({x}_{j}^{k}\right)\right) .$

Herein, ${x}_{i}^{k + 1}$ represents a parameter of a local model obtained after a (k+1)^{th} (k is a natural number) update in an i^{th} node, ${x}_{i}^{k}$ represents a parameter of a local model obtained after a k^{th} update in the i^{th} node (if k is 0, it indicates that ${x}_{i}^{k}$ a parameter of a local model that does not participate in an update in the i^{th} node), αₖ represents an optimization coefficient, *Nᵢ* is a set of neighboring nodes of the node *i*, and |*Nᵢ*| represents a quantity of elements in the set of neighboring nodes of the node *i*, that is, a quantity of neighboring nodes of the node *i*. Through information exchange between nodes, the decentralized learning system finally learns a unified model.

### 4. Split learning

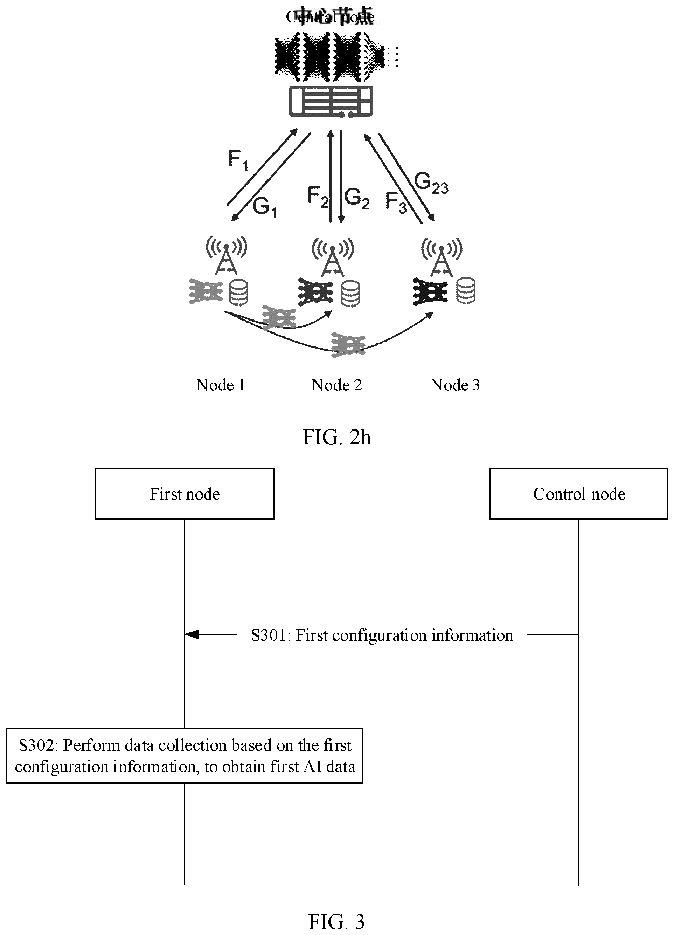

As shown in FIG. 2h, in split learning (split learning), a complete neural network model is split into two parts (that is, two subnetworks), one part is deployed on a distributed node (for example, a node 1, a node 2, and a node 3 in FIG. 2h), and the other part is deployed on a central node. A place in which the complete neural network is split is referred to as a "split layer". During forward inference, the distributed node inputs local data into a local subnetwork, performs inference to the split layer, and sends a result Fk (for example, F1/F2/F3 in the figure) of the split layer to the central node through a communication link. The central node inputs the received Fk into the other subnetwork deployed on the central node, and continues to perform forward inference to obtain a final inference result. During reverse gradient transfer of model training, a gradient is reversely transferred to the split layer through the subnetwork of the central node, to obtain a reverse transfer result Gk (for example, G1/G2/G3 in the figure). Then, the central node sends Gk to the distributed node, and reverse gradient transfer continues to be performed on the subnetwork of the distributed node. Optionally, in split learning, models deployed on different distributed nodes may be the same, or may be different, and may be determined based on requirements and capabilities of the different distributed nodes. This is not limited herein.

Optionally, a distributed node may further send a local model-related parameter to another distributed node. For example, in FIG. 2h, the node 1 may send a local model-related parameter to the node 2 and the node 3. In this example, the node 1 first trains a local model (denoted as a model 1). Optionally, the node 1 may send a model-related parameter of the model 1 to another node, so that the another node can continue training based on the model 1, to obtain a local model of the another node more quickly.

It can be learned that, in a process of forward inference and reverse gradient transfer of split learning, one distributed node and one central node may be involved. A subnetwork of a trained distributed node may be stored on the distributed node locally or on a specific model storage server. When a new distributed node joins in a learning system, the distributed node may first download the subnetwork of the trained distributed node, and then use local data for further training.

The technical solutions provided in this application may be applied to a wireless communication system (for example, the system shown in FIG. 1a, FIG. 1b, or FIG. 1c). In the wireless communication system, a communication node usually has a signal receiving and sending capability and a computational capability. A network device having a computational capability is used as an example. The computational capability of the network device is mainly to provide computational power support for a signal receiving and sending capability (for example, performing signal sending processing and receiving processing), to implement a communication task between the network device and another communication node.

However, in a communication network, in addition to processing a communication signal in the communication network, the communication node may further need to take into account AI-related processing. Therefore, how to integrate the AI-related processing with the communication network is an urgent technical problem to be resolved.

To resolve the foregoing problem, this application provides a communication method and a related device, so that a communication node can collect artificial intelligence (artificial intelligence, AI) data. Detailed descriptions are provided below with reference to the accompanying drawings.

FIG. 3 is a diagram of an implementation of a communication method according to this application. The method includes the following steps.

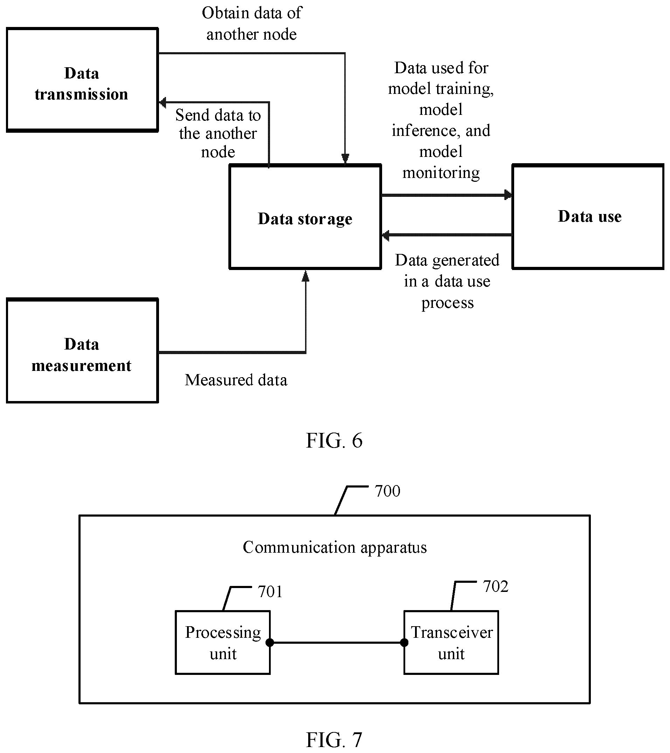

It should be noted that, in FIG. 3, the method is illustrated by using an example in which a first node and a control node are execution bodies of the interaction illustration. However, the execution bodies of the interaction illustration are not limited in this application. For example, in FIG. 3 and FIG. 6 below, the execution bodies of the method may alternatively be chips, chip systems, processors, logical modules, software, or the like in communication apparatuses. The first node may be a terminal device, and the control node may be a network device. Alternatively, both the first node and the control node are terminal devices (for example, the method may be applied to a communication process of different terminal devices in a sidelink communication scenario).

S301: The control node sends first configuration information, and correspondingly, the first node receives the first configuration information. The first configuration information is used to configure AI data collection.

S302: The first node performs data collection based on the first configuration information, to obtain first AI data. The first AI data is used for model processing of a first AI model.

In this application, terms such as data collection, data acquisition, data gathering, data obtaining, and data capture are interchangeable.

In this application, terms such as an AI model, a neural network model, an AI neural network model, a machine learning model, and an AI processing model are interchangeable.

Optionally, a wireless communication signal may be transmitted (for example, configuration information of a communication resource may be received/sent, or a reference signal may be received/sent) between different communication nodes (for example, the first node, the control node, and another node mentioned below, including a second node, a central node, and the like). The AI model (for example, the first AI model and a second AI model mentioned below) in embodiments of this application may be configured to process (including at least one of management, configuration, update, and optimization) the wireless communication signal. For example, the AI model may include one or more of an AI model used for modulation and/or demodulation, an AI model used for channel prediction, an AI model used for beam management, an AI model used for assisted positioning, an AI model used for channel compression, an AI model used for resource scheduling, an AI model used for mobility management, an AI model used for load balancing, an AI model used for network energy saving, and an AI model used to replace one or more modules in a transmitter and/or a receiver. Alternatively, the AI model in embodiments of this application may be an AI model used for another AI task, for example, an AI model used for image recognition, an AI model used for natural language processing, or an AI model used for computer vision.

In a possible implementation of the solution shown in FIG. 3, the first node is one of N distributed nodes, and N is an integer greater than or equal to 1.

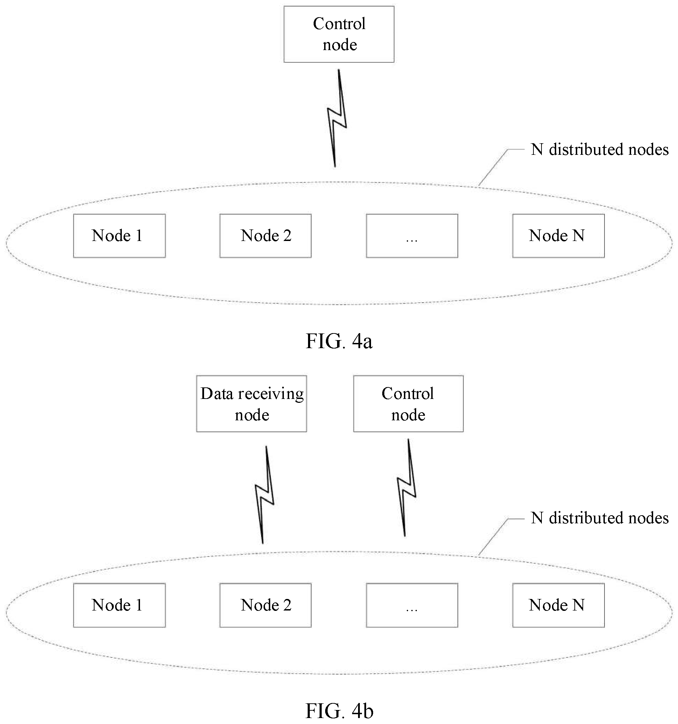

In an implementation example, as shown in FIG. 4a, an example in which a value of N is greater than 2 is used. The N nodes may include a node 1, a node 2, ..., and a node N in FIG. 4a, and the control node may communicate with the N distributed nodes. The first node may be any one of the N nodes. In other words, any one of the N distributed nodes may perform the method performed by the first node, so that all the N distributed nodes can serve as data collection nodes, to implement AI data collection in a distributed scenario.

In a possible implementation, in an example shown in FIG. 4b, in addition to communicating with the control node, the N distributed nodes may further communicate with a data receiving node.

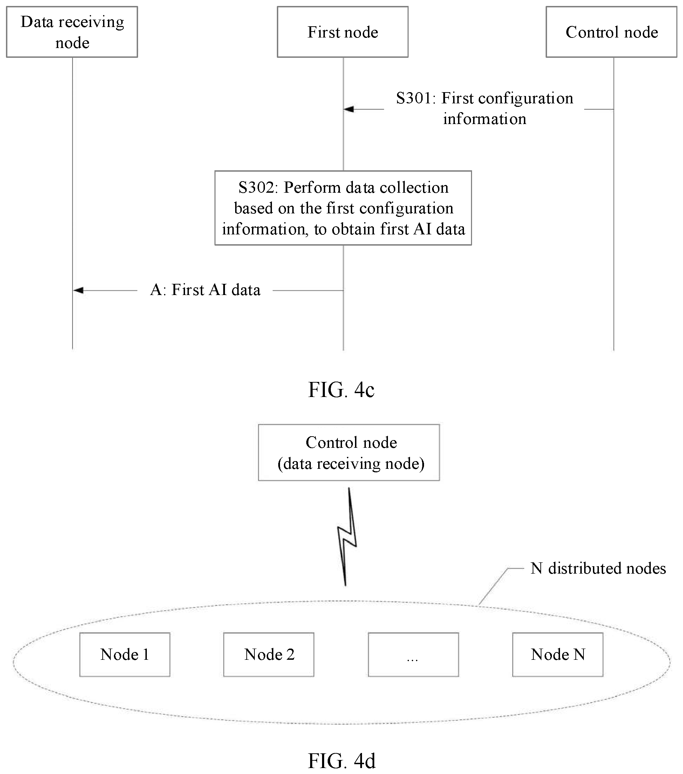

In an example shown in FIG. 4c, when the control node and the data receiving node are different nodes, in comparison with that in the implementation process shown in FIG. 3, after step S302, the first node may further send the first AI data to the data receiving node in step A, and subsequently, the data receiving node may perform model processing on the first AI model based on the first AI data.

In a possible implementation, in an example shown in FIG. 4d, in addition to communicating with the control node, the N distributed nodes may further communicate with a data receiving node. In addition, when the control node and the data receiving node are a same node, a function of the control node (for example, determining and delivering configuration information) and a function of the data receiving node (for example, receiving AI data) are implemented by using the same node.

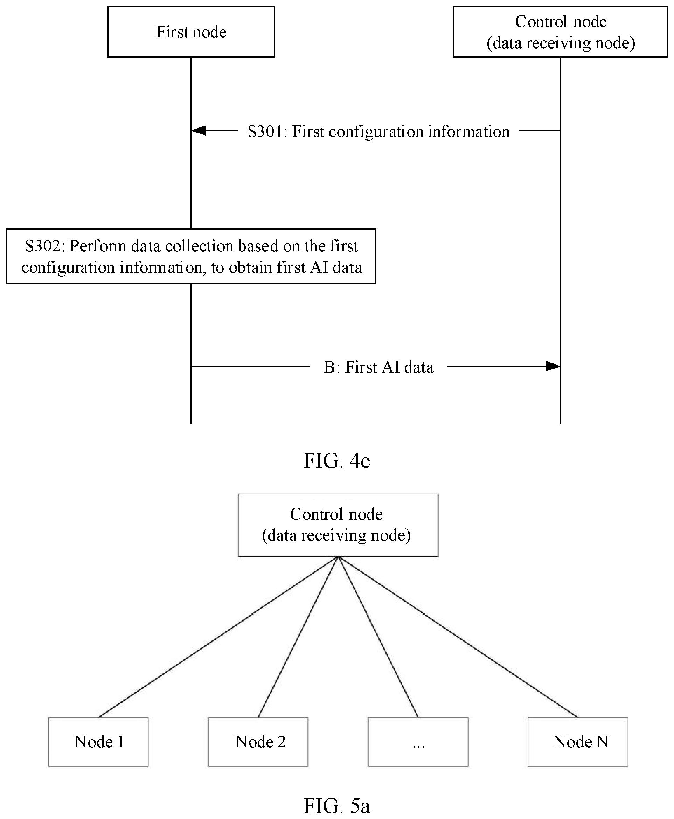

Similarly, in an example shown in FIG. 4e, in comparison with that in the implementation process shown in FIG. 3, after step S302, the first node may further send the first AI data to the control node (the data receiving node) in step B, and subsequently, the control node (the data receiving node) may perform model processing on the first AI model based on the first AI data.

It should be noted that the data receiving node may perform a model processing process on the first AI model based on the first AI data in a plurality of manners. For example, when the first AI model is deployed on the data receiving node, the data receiving node may locally perform model processing on the first AI data based on the first AI model. For another example, when the first AI model is deployed on another node (for example, one or more of the N distributed nodes, or another node (for example, a central node) that is different from the N distributed nodes and that is not shown in FIG. 4b/FIG. 4d), the data receiving node may send the first AI data to the another node, so that the another node may subsequently perform model processing on the first AI data based on the first AI model.

Optionally, the model processing includes at least one of model training, model inference, and model monitoring. Correspondingly, the first AI data sent by the first node in step A or step B includes at least one of AI data used in a model training phase of the first AI model, AI data used in a model inference phase of the first AI model, and AI data used in a model monitoring phase of the first AI model.

In an implementation example, the AI data that is included in the first AI data and that is used in the model training phase of the first AI model may include at least one of input data, feature data, and label data used for training of the first AI model.

In another implementation example, the AI data that is included in the first AI data and that is used in the model inference phase of the first AI model may include at least one of input data, feature data, and inference result data used for inference of the first AI model.

In another implementation example, the AI data that is included in the first AI data and that is used in the model monitoring phase of the first AI model may include at least one of input data, feature data, label data, inference result data, AI model performance data, and communication performance data used for monitoring of the first AI model. Optionally, the feature data may indicate intermediate data, an intermediate result, and the like of inference of the AI model.

Optionally, the AI model performance data may refer to learning performance, for example, accuracy, an inference delay, and inference complexity.

Optionally, the communication performance data may refer to performance of a communication system, for example, a throughput, a packet loss rate, and a delay.

It should be noted that, for the distributed node, in a process in which the distributed node performs data collection based on configuration information to obtain AI data (for example, a process in which the first node performs data collection based on the first configuration information in step S302 to obtain the first AI data), the distributed node may collect the AI data in the following plurality of manners.

Manner 1: The distributed node collects the AI data based on a communication process.

For example, in Manner 1, the distributed node serves as a communication node, and the related communication process may include signal modulation and/or demodulation, reference signal measurement, sensing signal receiving and sending, and the like. Correspondingly, the AI data collected by the distributed node based on the communication process may include one or more of a signal modulation and/or demodulation result, a reference signal measurement result, and a sensing result of a sensing signal.

Manner 2: The distributed node may collect the AI data based on data related to model processing of an AI model deployed locally.

For example, in Manner 2, the AI data collected by the distributed node may include one or more of data used for model training of the local AI model, data used for model inference of the local AI model, and data used for model monitoring of the local AI model.

It may be understood that, it can be learned from the foregoing description that, for the first node, the AI model deployed locally on the first node may include the first AI model, or may include another AI model different from the first AI model. This is not limited herein.

It may be understood that the AI data collected in Manner 1 and Manner 2 may include a same part, that is, the data obtained in Manner 1 may be the same as the data obtained in Manner 2. For example, when an AI model locally deployed on a distributed node is an AI model used for signal modulation and/or demodulation, a communication signal received/sent by the distributed node may be data exchanged in the communication process in Manner 1, or may be data related to the model processing in Manner 2.

In a possible implementation of the solution shown in FIG. 3, after step S302, the method further includes: The first node sends data of the first node to another node in the N distributed nodes, where the data of the first node is used for data collection of the another node. Specifically, for the N distributed nodes, a part or all of AI data collected by one of the distributed nodes may be determined by using data sent by another distributed node. Correspondingly, the first node may further send the data of the first node to another node in the N distributed nodes. For example, when the first node is the node 1 in FIG. 4a/FIG. 4b/FIG. 4d, the another node may be one or more of the node 2 to the node N, so that the another node can implement data collection based on the data of the first node. For example, the another node may use the received data of the first node as the data in Manner 1 and/or Manner 2, to determine AI data collected by the another node.

Optionally, the data of the first node may include a part or all of the first AI data.

Optionally, the data of the first node may include communication data of the first node, for example, a reference signal or positioning data.

Optionally, the data of the first node may include model data of a local AI model of the first node, for example, at least one of AI data used in a model training phase of the local AI model, AI data used in a model inference phase of the local AI model, and AI data used in a model monitoring phase of the local AI model.

In a possible implementation of the solution shown in FIG. 3, before step S302, the method further includes: The first node receives data from another node in the N distributed nodes, where the data of the another node is used to determine a part or all of the first AI data. Similarly, for the N distributed nodes, a part or all of AI data collected by one of the distributed nodes may be determined by using data sent by another distributed node. Correspondingly, the first node may further receive the data from the another node in the N distributed nodes (for example, second data from the second node), so that the first node can implement data collection based on the data of the another node. For example, the first node may use the received data of the another node as the data in Manner 1 and/or Manner 2, to determine the first AI data collected by the first node.

Optionally, it can be learned from the foregoing description that the first AI model may be deployed on the data receiving node or another node, and the second AI model may be deployed on another node in the N distributed nodes. The two AI models, namely, the first AI model and the second AI model, may be AI models that have an association relationship.

For example, the two AI models may be an AI model deployed on a central node and an AI model deployed on a distributed node in a central learning scenario in FIG. 2f.

For another example, the two AI models may be AI models deployed on any two adjacent or non-adjacent distributed nodes in a central learning scenario in FIG. 2f.

For another example, the two AI models may be AI models deployed on any two adjacent or non-adjacent distributed nodes in distributed learning in FIG. 2g.

For another example, the two AI models may be an AI model deployed on a central node and an AI model deployed on a distributed node in split learning in FIG. 2h.

For another example, the two AI models may be AI models deployed on any two adjacent or non-adjacent distributed nodes in split learning in FIG. 2h.

Optionally, the data of the another node may include communication data of the another node, for example, a reference signal or positioning data.

Optionally, the data of the another node may include model data of a local AI model of the another node, for example, at least one of AI data used in a model training phase of the local AI model, AI data used in a model inference phase of the local AI model, and AI data used in a model monitoring phase of the local AI model. For example, the another node is the second node. A local AI model of the second node may be denoted as a second AI model, and model data of the second AI model may be denoted as second AI data. An implementation of the second AI data is similar to that of the first AI data. The second AI data received by the first node may include at least one of AI data used in a model training phase of the second AI model, AI data used in a model inference phase of the second AI model, and AI data used in a model monitoring phase of the second AI model.

In an implementation example, the AI data that is included in the second AI data and that is used in the model training phase of the second AI model includes at least one of input data, feature data, and label data used for training of the second AI model.

In another implementation example, the AI data that is included in the second AI data and that is used in the model inference phase of the second AI model includes at least one of input data, feature data, and inference result data used for inference of the second AI model.

In another implementation example, the AI data that is included in the second AI data and that is used in the model monitoring phase of the second AI model includes at least one of input data, feature data, label data, inference result data, AI model performance data, and communication performance data used for monitoring of the second AI model. It can be learned from the foregoing descriptions of the AI processing architectures shown in FIG. 2f to FIG. 2h that an intermediate node may participate in an interaction process between different distributed nodes, or the intermediate node may not need to participate. The following provides descriptions with reference to more implementation examples.

In a possible implementation, in step S301, the first node may receive the first configuration information in a plurality of manners. For example, a process in which the first node receives the first configuration information includes: The first node receives the first configuration information from the control node, where the control node is configured to control data collection of the N distributed nodes; or the first node receives the first configuration information from the control node through a central node; or the first node receives the first configuration information from the second node, where the second node is a node different from the first node in the N distributed nodes, and N is greater than 1. Specifically, the first node may receive the first configuration information in the foregoing plurality of manners. The first node is one of the N distributed nodes. In this manner, the distributed node can receive the first configuration information in a plurality of different scenarios, and flexibility of implementing the solution is improved.

Optionally, the control node and the central node may be a same node, or the control node and the central node may be different logical nodes in a physical node, or the control node and the central node may be two independent different nodes.

In an implementation example, the first configuration information received by the first node is configuration information corresponding to the first node in M pieces of configuration information, the M pieces of configuration information are at least used to configure AI data collection of M distributed nodes in the N distributed nodes, and M is less than or equal to N. The method further includes: The first node sends at least one of the M pieces of configuration information to at least one of the M distributed nodes. Specifically, the first node may receive the M pieces of configuration information, and determine the first configuration information from the M pieces of configuration information. The M pieces of configuration information are at least used to configure AI data collection of the M distributed nodes in the N distributed nodes. Correspondingly, the first node may send at least one of the M pieces of configuration information to another node in the M distributed nodes, so that the another distributed node can obtain the corresponding configuration information and perform AI data collection.

Optionally, the first node sends the at least one of the M pieces of configuration information to the at least one of the M distributed nodes, to enable all the M distributed nodes to obtain respective corresponding configuration information, so that the M distributed nodes can implement AI data collection based on the respective corresponding configuration information. Further, optionally, in the sending process, the first node may send, to each of the M distributed nodes, configuration information corresponding to each distributed node; or the first node may send the M pieces of configuration information to each of the M distributed nodes; or the first node may send the M pieces of configuration information to some of the M distributed nodes, and the some distributed nodes send, to some other distributed nodes, configuration information corresponding to the some other distributed nodes; or all the M distributed nodes are enabled, in another manner, to obtain respective corresponding configuration information. This is not limited herein.

Optionally, in the N distributed nodes, configuration information corresponding to different distributed nodes may be different from each other. Therefore, the M pieces of configuration information are respectively used to configure AI data collection of the M distributed nodes in the N distributed nodes.

Optionally, in the N distributed nodes, configuration information corresponding to different distributed nodes may be the same. Therefore, in addition to that the M pieces of configuration information may be respectively used to configure AI data collection of the M distributed nodes in the N distributed nodes, at least one of the M pieces of configuration information may be further used to configure AI data collection of at least one distributed node other than the M distributed nodes in the N distributed nodes.

For example, configuration information corresponding to different distributed nodes may be different from each other, that is, the M pieces of configuration information are respectively used to configure AI data collection of the M distributed nodes. In other words, the first node may send M-1 pieces of configuration information other than the first configuration information in the M pieces of configuration information to M-1 distributed nodes other than the first node in the M distributed nodes. The first node sends the M-1 pieces of configuration information other than the first configuration information in the M pieces of configuration information in a plurality of manners. For example, when the M-1 pieces of configuration information are respectively used for AI data collection of M-1 different distributed nodes, the first node may respectively send the M-1 pieces of configuration information to the M-1 different distributed nodes; or the first node may send the M-1 pieces of configuration information to a next-hop node in the M-1 different distributed nodes, the next-hop node obtains local configuration information from the M-1 pieces of configuration information and sends M-2 pieces of configuration information other than the local configuration information in the M-1 pieces of configuration information to a next-hop node of the next-hop node, and so on, until the M-1 different distributed nodes all obtain respective configuration information.

It may be understood that, when configuration information corresponding to different distributed nodes may be the same, the first node may send the M-1 pieces of configuration information with reference to the foregoing plurality of manners.

In a possible implementation, after the first node obtains the first AI data in step S302, the first node may send the first AI data in a plurality of manners. For example, a process in which the first node sends the first AI data includes: The first node sends the first AI data to the data receiving node, where the data receiving node is used for AI data collection; or the first node sends the first AI data to the central node. Specifically, the first node may send the first AI data in the foregoing plurality of manners. The first node is one of the N distributed nodes. In this manner, the distributed node can send collected AI data in a plurality of different scenarios, and flexibility of implementing the solution is improved.

Optionally, the control node and the data receiving node may be a same node, or the control node and the data receiving node may be different logical nodes in a physical node, or the control node and the data receiving node may be two independent different nodes.

It can be learned from the foregoing implementation process that the distributed node may receive the configuration information and send the AI data in a plurality of manners. The following provides example descriptions with reference to scenarios shown in FIG. 5a to FIG. 5c. It should be understood that, in the following examples shown in FIG. 5a to FIG. 5c, an example in which the control node and the data receiving node shown in FIG. 4c are a same node is used for description. However, in actual application, the control node and the data receiving node may be different nodes. In an implementation A, the control node (the data receiving node) separately communicates with the N distributed nodes, to send configuration information of the N distributed nodes and receive AI data of the N distributed nodes.

In an implementation example of the implementation A, as shown in FIG. 5a, when communication between the control node (the data receiving node) and the N distributed nodes is reachable, the control node (the data receiving node) may communicate with each distributed node. For example, a direct link exists between the control node (the data receiving node) and each distributed node for communication, or the control node (the data receiving node) may communicate with each distributed node through one or more relay nodes.

Correspondingly, in FIG. 5a, the N distributed nodes each may serve as the first node, that is, the control node (the data receiving node) may perform, for N times in step S301, a process of sending the first configuration information, so that the N distributed nodes separately receive respective configuration information. In addition, the N distributed nodes may implement AI data collection based on the respective configuration information in step S302. In addition, as shown in step B in FIG. 4e, after step S302, the N distributed nodes may send respective collected AI data to the control node (the data receiving node).

In an implementation B, the control node (the data receiving node) communicates with one of the N distributed nodes, to send configuration information of the N distributed nodes and receive AI data of the N distributed nodes.

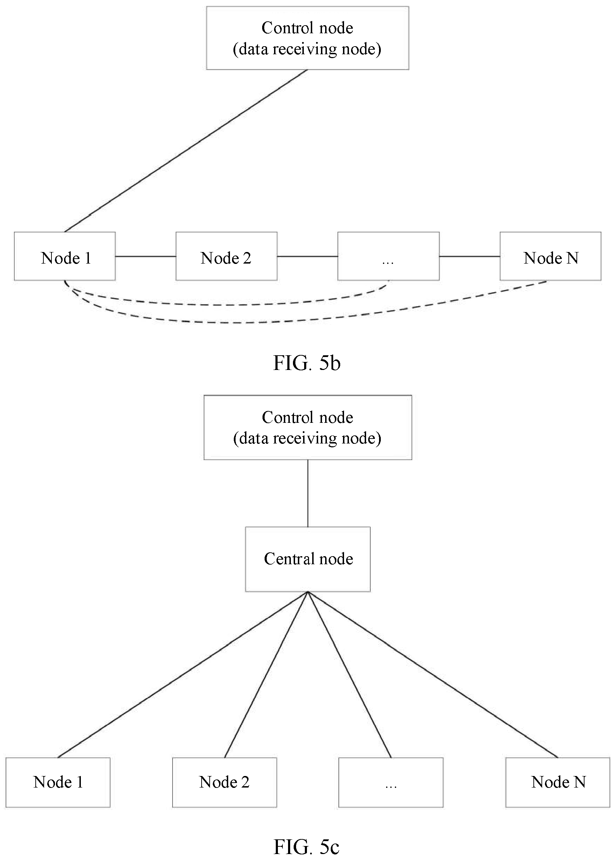

In an implementation example of the implementation B, as shown in FIG. 5b, when communication between the control node (the data receiving node) and one node (a node 1 is used as an example in FIG. 5b) in the N distributed nodes is reachable, and communication between different distributed nodes is reachable, the control node (the data receiving node) may send the configuration information of the N distributed nodes through a communication process with the node 1. For example, a direct link exists between the control node (the data receiving node) and the node 1 for communication, or the control node (the data receiving node) may communicate with the node 1 through one or more relay nodes.

Correspondingly, in FIG. 5b, the node 1 serves as the first node, and may receive, in step S301, K pieces of configuration information including the first configuration information.

Optionally, in the N distributed nodes, configuration information corresponding to different distributed nodes may be different from each other. Therefore, values of K and N may be equal, that is, the K pieces of configuration information may be used to configure AI data collection of different nodes in the N distributed nodes.

Optionally, in the N distributed nodes, configuration information corresponding to different distributed nodes may be the same. Therefore, K may be less than N, that is, at least one of the K pieces of configuration information is used to configure AI data collection of at least two of the N distributed nodes. Correspondingly, configuration information for AI data collection of the at least two nodes is the same.

For example, the K pieces of configuration information may be used to configure AI data collection of different nodes in the N distributed nodes, that is, K is equal to N. For ease of understanding, the K pieces of configuration information are denoted as N pieces of configuration information below. When N is greater than 1, if a communication link (for example, a dashed line in FIG. 5b) exists between the node 1 and each of the other N-1 nodes, the node 1 may respectively send N-1 pieces of configuration information other than the first configuration information in the N pieces of configuration information to the other N-1 nodes, so that all the N distributed nodes can obtain respective configuration information and perform data collection based on the configuration information. Alternatively, the node 1 may send N-1 pieces of configuration information other than the first configuration information in the N pieces of configuration information to an adjacent node (for example, a node 2). Similarly, after the node 2 obtains, from the N-1 pieces of configuration information, configuration information (for example, second configuration information) corresponding to the node 2, the node 2 may also send N-2 pieces of configuration information other than the first configuration information and the second configuration information in the N pieces of configuration information to an adjacent node, and so on, until all the N distributed nodes can obtain respective configuration information and perform data collection based on the configuration information.

Then, in FIG. 5b, the node 2 to the node N may send, to the node 1 with reference to a reverse transmission process of the foregoing process, AI data collected by the node 2 to the node N. Subsequently, the node 1 may send, to the control node (the data receiving node) through one or more sending processes, the AI data collected by the N distributed nodes. In this manner, the control node (the data receiving node) can deliver the configuration information of the N distributed nodes, and receive the AI data collected by the N distributed nodes.

It should be noted that implementation processes of the implementation A and the implementation B may be combined with each other. For example, in the N distributed nodes, M (M is a positive integer) nodes perform communication in the manner in the implementation B, and the other N-M nodes perform communication in the manner in the implementation A. In other words, for the M nodes, sending of the configuration information of the M distributed nodes and receiving of the AI data of the M distributed nodes may be implemented through a communication process between the control node (the data receiving node) and one of the M nodes. For the N-M nodes, the control node (the data receiving node) separately communicates with the N-M distributed nodes, to implement sending of configuration information of the N-M distributed nodes and receiving of AI data of the N-M distributed nodes. For a specific implementation process, refer to the implementation processes of the foregoing implementation A and implementation B.

In an implementation C, the control node (the data receiving node) communicates with the central node, to send configuration information of the N distributed nodes and receive AI data of the N distributed nodes.

In an implementation example of the implementation C, as shown in FIG. 5c, when communication between the control node (the data receiving node) and the central node is reachable, the control node (the data receiving node) may send the configuration information of the N distributed nodes through a communication process with the central node. For example, a direct link exists between the control node (the data receiving node) and the central node for communication, or the control node (the data receiving node) may communicate with the central node through one or more relay nodes.

Correspondingly, in FIG. 5c, any one of the N distributed nodes may serve as the first node. In step S301, the central node receives the first configuration information, so that all the N distributed nodes can obtain respective configuration information and perform data collection based on the configuration information in step S302.

Then, in FIG. 5c, any one of the N distributed nodes may serve as the first node. After step S302, the nodes send respective collected AI data to the central node, so that the central node obtains N pieces of AI data. Then, the central node may process the N pieces of received AI data (for example, perform data screening processing, data combination processing, or data redundancy removal processing), and then send processed data to the control node (the data receiving node), or the central node may transparently forward the N pieces of AI data to the control node (the data receiving node). In this centralized implementation, through the central node, the control node (the data receiving node) can deliver the configuration information of the N distributed nodes, and receive the AI data collected by the N distributed nodes.

Optionally, in FIG. 5c, the control node may not communicate with one or more of the N distributed nodes through the central node. Therefore, in the foregoing process of receiving the configuration information by the distributed nodes, the configuration information may be received and sent through transmission by the central node, or the configuration information may be received and sent without transmission by the central node (refer to the foregoing implementation processes shown in FIG. 5a and FIG. 5b). This is not limited herein. Similarly, in the foregoing process of sending the AI data by the distributed nodes, the AI data may be received and sent through transmission by the central node, or the AI data may be received and sent without transmission by the central node (refer to the foregoing implementation processes shown in FIG. 5a and FIG. 5b). This is not limited herein.

It should be noted that there may be a communication link for reachable communication between the central node and each of the N distributed nodes, or there may be a link for reachable communication between the central node and only a part of distributed nodes. For the two implementation processes, refer to the foregoing implementation A, the foregoing implementation B, and the foregoing implementation processes of the M nodes and the N-M nodes.

Optionally, in FIG. 5c, the central node, the control node, and the data receiving node may be deployed on a same node. In other words, the three nodes: the central node, the control node, and the data receiving node, may be three different nodes, or any two or three of the three nodes: the central node, the control node, and the data receiving node, may be a same node.

In a possible implementation, the first configuration information received by the first node in step S301 includes at least one of the following information A to information J.

Information A: an identifier (or an index) of an AI model corresponding to collected AI data.

Information B: an identifier (or an index) of an AI function corresponding to collected AI data.

Information C: indication information indicating model processing corresponding to collected AI data.

Information D: indication information indicating that a configuration manner of configuration information for AI data collection is a centralized manner or a decentralized manner.

Information E: indication information indicating that an AI data collection manner is a centralized manner or a decentralized manner.

Information F: indication information indicating an AI data feature of collected AI data.

Information G: indication information indicating AI data processing of collected AI data.

Information H: indication information indicating an AI data collection period.

Information I: indication information indicating transmission information of collected AI data.

Information J: an identifier of a source node of collected AI data.

For the information A, it can be learned from the foregoing definition of the AI model that the identifier of the AI model in the information A may identify (or indicate) the AI model. In other words, when the first configuration information includes the information A, the first AI data obtained by the first node by performing data collection based on the first configuration information includes data of the AI model corresponding to the identifier of the AI model indicated by the information A. For example, the identifier of the AI model in the information A may be specifically an identifier of an AI model used for modulation and/or demodulation, an identifier of an AI model used for channel prediction, an identifier of an AI model used for beam management, an identifier of an AI model used for assisted positioning, an identifier of an AI model used for channel compression, an identifier of an AI model used for resource scheduling, an AI model used for mobility management, an AI model used for load balancing, an AI model used for network energy saving, an identifier of an AI model used to replace one or more modules in a transmitter and/or a receiver, an identifier of an AI model used for image recognition, an identifier of an AI model used for natural language processing, an identifier of an AI model used for computer vision, or the like.

For the information B, it can be learned from the foregoing definition of the AI model that the identifier of the AI function in the information B may identify (or indicate) a function of the AI model. In other words, when the first configuration information includes the information B, the first AI data obtained by the first node by performing data collection based on the first configuration information includes AI data corresponding to the identifier of the AI function indicated by the information B. For example, the identifier of the AI function in the information B may be specifically an identifier of a function used for modulation and/or demodulation, an identifier of a function used for channel prediction, an identifier of a function used for beam management, an identifier of a function used for assisted positioning, an identifier of a function used for channel compression, an identifier of a function used for resource scheduling, an AI model used for mobility management, an AI model used for load balancing, an AI model used for network energy saving, an identifier of a function used to replace one or more modules in a transmitter and/or a receiver, an identifier of a function used for image recognition, an identifier of a function used for natural language processing, an identifier of a function used for computer vision, or the like.

For the information C, because model processing may include at least one of model training, model inference, and model monitoring, the information C may include at least one of indication information indicating that the collected AI data is used for (or corresponds to) model training, indication information indicating that the collected AI data is used for (or corresponds to) model inference, and indication information indicating that the collected AI data is used for (or corresponds to) model monitoring. In other words, when the first configuration information includes the information C, the first AI data obtained by the first node by performing data collection based on the first configuration information includes AI data for processing of at least one model indicated by the information C.

For the information D and the information E, it can be learned from the foregoing examples shown in FIG. 5a to FIG. 5c that data exchanged between the distributed node and the control node (the data receiving node) may be transmitted through the central node, or may not be transmitted through the central node. Therefore, whether the central node participates in transmission in a configuration process of the configuration information (for example, the first configuration information) may be determined based on an indication of the information D. If the central node participates in transmission, the information D indicates that the configuration manner of the configuration information for AI data collection is the centralized manner. If the central node does not participate in transmission, the information D indicates that the configuration manner of the configuration information for AI data collection is the decentralized manner. In other words, when the first configuration information includes the information D, if the information D indicates the centralized manner, the first configuration information received by the first node is configured through the central node; or if the information D indicates the decentralized manner, the first configuration information received by the first node is configured through the control node instead of the central node.

Similarly, whether the central node participates in transmission in a collection process of the AI data (for example, the first AI data) may be determined based on an indication of the information E. If the central node participates in transmission, the information E indicates that the AI data collection manner is the centralized manner. If the central node does not participate in transmission, the information E indicates that the AI data collection manner is the decentralized manner. In other words, when the first configuration information includes the information E, if the information E indicates the centralized manner, the first node sends the first AI data to the central node after the first node obtains the first AI data by performing data collection based on the first configuration information; or if the information E indicates the decentralized manner, the first node sends the first AI data to the data receiving node after the first node obtains the first AI data by performing data collection based on the first configuration information, instead of sending the first AI data to the central node.

For the information F, the AI data feature includes one or more of a quantity of AI data, a sample size, collection time, a collection location, and a distribution. In other words, when the first configuration information includes the information F, the first AI data obtained by the first node by performing data collection based on the first configuration information meets the AI data feature indicated by the information F.

For the information G, the AI data processing includes post-processing of output data of the AI model and/or preprocessing of input data of the AI model, for example, one or more of dimension conversion and precision conversion. In other words, when the first configuration information includes the information G, the first AI data obtained by the first node by performing data collection based on the first configuration information meets the post-processing and/or the preprocessing indicated by the information G.

For the information H, the AI data collection period includes: The AI data is collected in a periodic manner, the AI data is collected in a semi-static manner, the AI data is collected in a (dynamic) trigger manner, or the like. In other words, when the first configuration information includes the information H, the first node performs data collection based on the collection period indicated by the information H, to obtain the first AI data.

For the information I, the transmission information of the AI data includes one or more of a data structure, a format, precision, a dimension, and a transmission resource. In other words, when the first configuration information includes the information I, the first AI data obtained by the first node by performing data collection based on the first configuration information meets the transmission information indicated by the information I.

For the information J, the first node may request/obtain/collect data from the source node based on the identifier of the source node of the collected AI data indicated by the information J, and determine a part or all of the first AI data based on the data from the source node.

It should be understood that, when the first configuration information includes at least one of the foregoing information A to information J, in step S301, the first configuration information may be sent by using one or more messages, that is, the first node may obtain the first configuration information by using a process of receiving one or more messages. Based on the technical solution shown in FIG. 3, after the first node receives the first configuration information in step S301, the first node may perform AI data collection based on the first configuration information in step S302, to obtain the first AI data. Then, the first node may send the first AI data. Subsequently, a receiver of the first AI data can perform model processing on the first AI model based on the first AI data. Therefore, when a communication node in a communication system serves as an AI participating node, the communication node can serve as an AI data collection node, to collect AI data.

In addition, the first node serves as a communication node. After the first node sends the first AI data, the receiver of the first AI data can implement model processing of an AI model based on AI data collected by the communication node.

Refer to FIG. 6. This application further provides a communication architecture. The communication architecture may be used for data collection.

In FIG. 6, the communication architecture includes at least a data storage module and a data transmission module. The data transmission module may be configured to transmit data between nodes (including between distributed nodes and between a distributed node and a central node). The data storage module may be configured to store data received from another node.

For example, the data storage module may include the data receiving node in any one of the foregoing embodiments, or the data receiving node in any one of the foregoing embodiments may be configured to perform a process performed by the data storage model.

For example, the data transmission module may include the distributed node (for example, the N distributed nodes) and/or the central node in any one of the foregoing embodiments, or the distributed node (for example, the N distributed nodes) and/or the central node in any one of the foregoing embodiments may be configured to perform a process performed by the data transmission model.

Optionally, the communication architecture may further include a data measurement module. The data measurement module may be configured to obtain measured data through measurement (including measurement based on a reference signal and measurement performed by using a sensing function). Correspondingly, the data storage module may be further configured to store data obtained by a local node through measurement.

For example, the data measurement module may include the node (for example, the N distributed nodes, the control node, the central node, or the data receiving node) in any one of the foregoing embodiments, or the node (for example, the N distributed nodes, the control node, the central node, or the data receiving node) in any one of the foregoing embodiments may be configured to perform a process performed by the data measurement module.

Optionally, the communication architecture may further include a data use module. The data use module may obtain, from a data storage, data used for model training, model inference, and model monitoring, and re-store data that may be generated during the model training, the model inference, and the model monitoring. Correspondingly, the data storage module may be further configured to store data generated in a data use process.

For example, the data use module may include the node on which an AI model is deployed (for example, the N distributed nodes, the control node, the central node, or the data receiving node) in any one of the foregoing embodiments, or the node (for example, the N distributed nodes, the control node, the central node, or the data receiving node) in any one of the foregoing embodiments may be configured to perform a process performed by the data use module.

Refer to FIG. 7. An embodiment of this application provides a communication apparatus 700. The communication apparatus 700 can implement a function of the first node (or the control node) in the foregoing method embodiments, and therefore can also achieve the beneficial effects of the foregoing method embodiments. In this embodiment of this application, the communication apparatus 700 may be the first node (or the control node), or may be an integrated circuit, an element, or the like, for example, a chip, in the first node (or the control node).

It should be noted that a transceiver unit 702 may include a sending unit and a receiving unit, which are respectively configured to perform sending and receiving.

In a possible implementation, when the apparatus 700 is configured to perform the method performed by the first node in the foregoing embodiments, the apparatus 700 includes a processing unit 701 and the transceiver unit 702. The transceiver unit 702 is configured to receive first configuration information, where the first configuration information is used to configure AI data collection. The processing unit 701 sends first AI data, where the first AI data is collected based on the first configuration information, and the first AI data is used for model processing of a first AI model.

In a possible implementation, when the apparatus 700 is configured to perform the method performed by the control node in the foregoing embodiments, the apparatus 700 includes a processing unit 701 and the transceiver unit 702. The processing unit 701 is configured to determine first configuration information, where the first configuration information is used for AI data collection. The transceiver unit 702 is configured to send the first configuration information.

It should be noted that, for content such as an information execution process of the units in the communication apparatus 700, refer to the descriptions in the foregoing method embodiments of this application. Details are not described herein again.

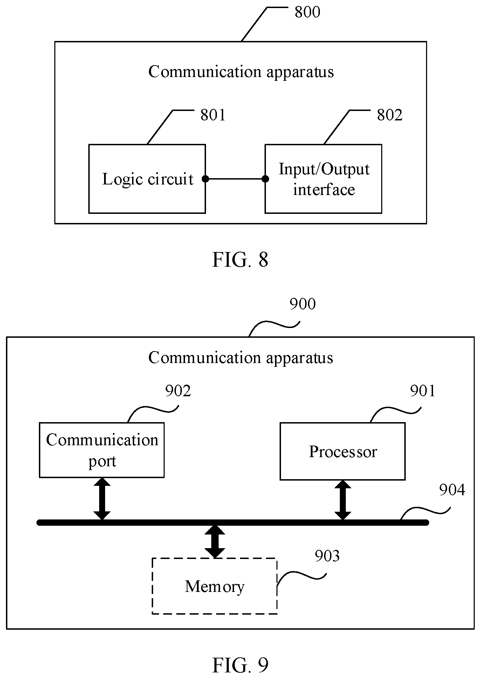

FIG. 8 is another diagram of a structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8. The input/output interface 802 may include an input interface and an output interface. Alternatively, the communication interface may be a transceiver circuit, and the transceiver circuit may include an input interface circuit and an output interface circuit.

Optionally, the input/output interface 802 is configured to receive first configuration information, where the first configuration information is used to configure AI data collection; and the logic circuit 801 sends first AI data, where the first AI data is collected based on the first configuration information, and the first AI data is used for model processing of a first AI model.

Optionally, the logic circuit 801 is configured to determine first configuration information, where the first configuration information is used for AI data collection; and the input/output interface 802 is configured to send the first configuration information.

The logic circuit 801 and the input/output interface 802 may further perform other steps performed by the first node or the control node in any embodiment and achieve corresponding beneficial effects. Details are not described herein. In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), systems on chip (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

FIG. 9 shows a communication apparatus 900 related to the foregoing embodiments according to an embodiment of this application. The communication apparatus 900 may be specifically the communication apparatus serving as a terminal device in the foregoing embodiments. In the example shown in FIG. 9, the terminal device is implemented as a terminal device (or a component in a terminal device).

In a diagram of a possible logical structure of the communication apparatus 900, the communication apparatus 900 may include but is not limited to at least one processor 901 and a communication port 902.

The transceiver unit 702 shown in FIG. 7 may be a communication interface. The communication interface may be the communication port 902 in FIG. 9. The communication port 902 may include an input interface and an output interface. Alternatively, the communication port 902 may be a transceiver circuit, and the transceiver circuit may include an input interface circuit and an output interface circuit.

Further, optionally, the apparatus may further include at least one of a memory 903 and a bus 904. In this embodiment of this application, the at least one processor 901 is configured to control and process an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiment. Details are not described herein again.

It should be noted that the communication apparatus 900 shown in FIG. 9 may be specifically configured to: implement the steps implemented by the terminal device in the foregoing method embodiments, and achieve technical effects corresponding to the terminal device. For a specific implementation of the communication apparatus shown in FIG. 9, refer to the descriptions in the foregoing method embodiments. Details are not described herein again.

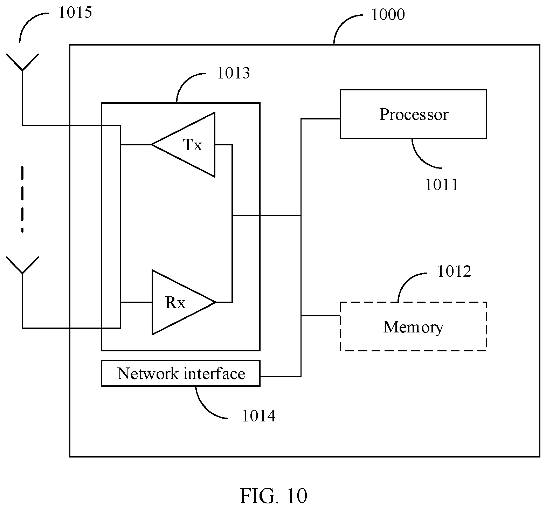

FIG. 10 is a diagram of a structure of a communication apparatus 1000 related to the foregoing embodiments according to an embodiment of this application. The communication apparatus 1000 may be specifically the communication apparatus serving as a network device in the foregoing embodiments. In the example shown in FIG. 10, the network device is implemented as a network device (or a component in a network device). For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, the transceiver 1013, and the network interface 1014 are connected, for example, by using a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface. The communication interface may be the network interface 1014 in FIG. 10. The network interface 1014 may include an input interface and an output interface. Alternatively, the network interface 1014 may be a transceiver circuit, and the transceiver circuit may include an input interface circuit and an output interface circuit.

The processor 1011 is mainly configured to: process a communication protocol and communication data, control the entire communication apparatus, execute a software program, and process data of the software program, for example, configured to support the communication apparatus in performing an action described in the embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1011 in FIG. 10 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may exist independently, and is connected to the processor 1011. Optionally, the memory 1012 and the processor 1011 may be integrated together, for example, integrated into one chip. The memory 1012 can store program code for performing the technical solutions in embodiments of this application, and execution is controlled by the processor 1011. Various types of executed computer program code may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal, and the receiver Rx of the transceiver 1013 is configured to receive the radio frequency signal from the antenna, convert the radio frequency signal into a digital baseband signal or a digital medium-frequency signal, and provide the digital baseband signal or the digital medium-frequency signal to the processor 1011, so that the processor 1011 performs further processing, for example, demodulation processing and decoding processing, on the digital baseband signal or the digital medium-frequency signal. In addition, the transmitter Tx in the transceiver 1013 is further configured to receive a modulated digital baseband signal or digital medium-frequency signal from the processor 1011, convert the modulated digital baseband signal or digital medium-frequency signal into a radio frequency signal, and send the radio frequency signal by using the one or more antennas 1015. Specifically, the receiver Rx may selectively perform one or more levels of down-mixing processing and analog-to-digital conversion processing on the radio frequency signal to obtain the digital baseband signal or the digital medium-frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

The transceiver 1013 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the communication apparatus 1000 shown in FIG. 10 may be specifically configured to: implement the steps implemented by the network device in the foregoing method embodiments, and achieve technical effects corresponding to the network device. For a specific implementation of the communication apparatus 1000 shown in FIG. 10, refer to the descriptions in the foregoing method embodiments. Details are not described herein again.

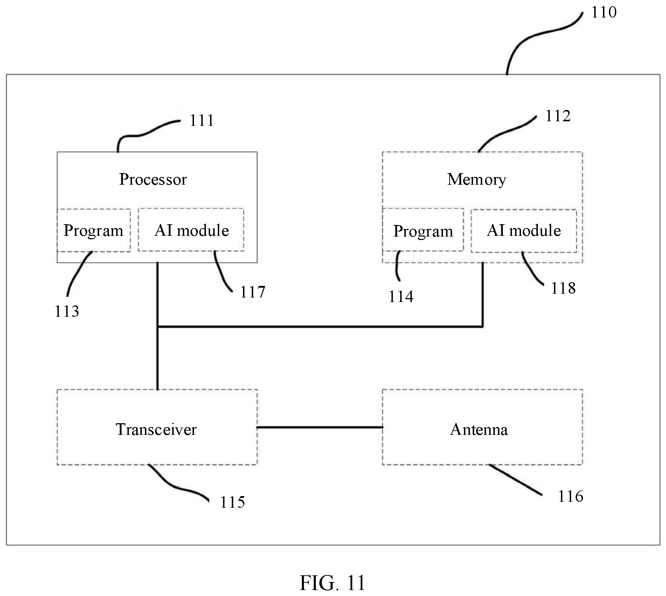

FIG. 11 is a diagram of a structure of a communication apparatus related to the foregoing embodiments according to an embodiment of this application.

It may be understood that the communication apparatus 110 includes, for example, modules, units, elements, circuits, or interfaces, which are appropriately configured together to perform the technical solutions provided in this application. The communication apparatus 110 may be the terminal device or the network device described above, or may be a component (for example, a chip) in these devices, to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 111 may include a program 113 (which may also be referred to as code or instructions sometimes). The program 113 may be run on the processor 111, to enable the communication apparatus 110 to perform the method described in the following embodiments. In another possible design, the communication apparatus 110 includes a circuit (not shown in FIG. 11).

Optionally, the communication apparatus 110 may include one or more memories 112 storing a program 114 (which may also be referred to as code or instructions sometimes). The program 114 may be run on the processor 111, to enable the communication apparatus 110 to perform the method described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC. Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 may also be referred to as a processing unit sometimes, and control the communication apparatus (for example, a RAN node or a terminal). The transceiver 115 may also be referred to as a transceiver unit, a transceiver machine, a transceiver circuit, a transceiver, or the like sometimes, and is configured to implement receiving and sending functions of the communication apparatus through the antenna 116.

The processing unit 701 shown in FIG. 7 may be the processor 111. The transceiver unit 702 shown in FIG. 7 may be a communication interface. The communication interface may be the transceiver 115 in FIG. 11. The transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method according to the possible implementations of the first node or the control node in the foregoing embodiments.

An embodiment of this application further provides a computer program product (or referred to as a computer program). When the computer program product is executed by the processor, the processor performs the method according to the possible implementations of the first node or the control node.

An embodiment of this application further provides a chip system. The chip system includes at least one processor configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first node or the control node in the foregoing method embodiments.

An embodiment of this application further provides a communication system. The network system architecture includes the first node and the control node in any one of the foregoing embodiments.

Optionally, the communication system further includes another node in N distributed nodes, for example, a second node.

Optionally, the communication system further includes a data receiving node.

Optionally, the communication system further includes a central node.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit. When the integrated unit is implemented in a form of a software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving first configuration information, wherein the first configuration information is used to configure AI data collection; and
sending first AI data, wherein the first AI data is collected based on the first configuration information, and the first AI data is used for model processing of a first AI model.

2. The method according to claim 1, wherein the method is applied to a first node, the first node is one of N distributed nodes, and N is an integer greater than 1; and
the receiving the first configuration information comprises:
receiving the first configuration information from a control node, wherein the control node is configured to control data collection of the N distributed nodes; or
receiving the first configuration information from a control node through a central node; or
receiving the first configuration information from a second node, wherein the second node is a node different from the first node in the N distributed nodes.

3. The method according to claim 1 or 2, wherein the first configuration information is configuration information corresponding to the first node in M pieces of configuration information, the M pieces of configuration information are at least used to configure AI data collection of M distributed nodes in the N distributed nodes, and M is less than or equal to N; and
the method further comprises:
sending one or more of the M pieces of configuration information to at least one of the M distributed nodes.

4. The method according to any one of claims 1 to 3, wherein the method is applied to the first node, the first node is one of the N distributed nodes, and N is an integer greater than or equal to 1; and
the sending the first AI data comprises:
sending the first AI data to a data receiving node, wherein the data receiving node is used for AI data collection; or
sending the first AI data to the central node.

5. The method according to claim 4, wherein the method further comprises:
sending data of the first node to another node in the N distributed nodes, wherein the first AI data is used for data collection of the another node.

6. The method according to any one of claims 1 to 5, wherein the method further comprises:
receiving data from the another node in the N distributed nodes, wherein the data of the another node is used to determine a part or all of the first AI data.

7. A communication method, comprising:
determining first configuration information, wherein the first configuration information is used for AI data collection; and
sending the first configuration information.

8. The method according to claim 7, wherein the method is applied to a control node, the control node is configured to control data collection of N distributed nodes, N is an integer greater than or equal to 1, and the first configuration information is used for AI data collection of a first AI node in the N distributed nodes; and
the sending the first configuration information comprises:
sending the first configuration information to the first node; or
sending the first configuration information to the first node through a central node; or
sending the first configuration information to the first node through a second node, wherein the second node is a node different from the first node in the N distributed nodes.

9. The method according to claim 8, wherein the first configuration information is one of K pieces of sent configuration information, the K pieces of configuration information are used to configure AI data collection of the N distributed nodes, and K is less than or equal to N.

10. The method according to any one of claims 7 to 9, wherein the method further comprises:
receiving first AI data, wherein the first AI data is collected based on the first configuration information.

11. The method according to claim 10, wherein the method is applied to the control node, the control node is configured to control the data collection of the N distributed nodes, N is an integer greater than or equal to 1, and the first configuration information is used for the AI data collection of the first AI node in the N distributed nodes; and
the receiving the first AI data comprises:
receiving the first AI data from the first node; or
receiving the first AI data through the central node.

12. The method according to any one of claims 1 to 11, wherein the first configuration information comprises at least one of the following:
an identifier of an AI model corresponding to collected AI data;
an identifier of an AI function corresponding to collected AI data;
an identifier of a source node of collected AI data;
indication information indicating model processing corresponding to collected AI data;
indication information indicating that a configuration manner of configuration information for AI data collection is a centralized manner or a decentralized manner;
indication information indicating that an AI data collection manner is a centralized manner or a decentralized manner;
indication information indicating an AI data feature of collected AI data;
indication information indicating AI data processing of collected AI data;
indication information indicating an AI data collection period; and
indication information indicating transmission information of collected AI data.

13. The method according to any one of claims 1 to 12, wherein the model processing comprises at least one of model training, model inference, and model monitoring.

14. The method according to any one of claims 1 to 13, wherein
the first AI data comprises at least one of AI data used in a model training phase of the first AI model, AI data used in a model inference phase of the first AI model, and AI data used in a model monitoring phase of the first AI model.

15. The method according to claim 14, wherein
the AI data used in the model training phase of the first AI model comprises at least one of input data, feature data, and label data used for training of the first AI model;
the AI data used in the model inference phase of the first AI model comprises at least one of input data, feature data, and inference result data used for inference of the first AI model; and
the AI data used in the model monitoring phase of the first AI model comprises at least one of input data, feature data, label data, inference result data, AI model performance data, and communication performance data used for monitoring of the first AI model.

16. A communication apparatus, comprising a module configured to perform the method according to any one of claims 1 to 15.

17. A communication apparatus, comprising at least one processor, wherein the at least one processor is coupled to a memory, and the at least one processor is configured to perform the method according to any one of claims 1 to 15.

18. The communication apparatus according to claim 17, wherein the communication apparatus is a chip or a chip system.

19. A readable storage medium, wherein the storage medium stores a computer program or instructions, and when the computer program or the instructions are executed by a communication apparatus, the method according to any one of claims 1 to 15 is implemented.
